# EUROPÄISCHE PATENTSCHRIFT

(11) **EP 0 555 711 B1**
(45) Veröffentlichungstag und Bekanntmachung des Hinweises auf die Patenterteilung: **16.04.1997**
(21) Anmeldenummer: 93101472.4
(22) Anmeldetag: 30.01.1993
(51) Int. Cl.: G01N 35/00, B65G 47/14

(54) **Vorrichtung zum lagerichtigen Zuführen von Teststreifen zu einer Analyseeinrichtung**
Apparatus for feeding correctly oriented test strips to an analyser
Dispositif pour fournir des éléments d'analyse orientés correctement à un analyseur

(30) Priorität: 13.02.1992 DE 4204245
(43) Veröffentlichungstag der Anmeldung: 18.08.1993
(73) Patentinhaber: BOEHRINGER MANNHEIM GMBH, 68298 Mannheim (DE)
(72) Erfinder: Kühn, Hans-Jürgen, W-8139 Bernried (DE); Menzler, Horst, W-8139 Bernried (DE); Sattler, Stephan, W-8123 Peissenberg (DE)
(74) Vertreter: Pfeifer, Hans-Peter, Dr., Dr. H.-P. Pfeifer Dr. P. Jany, Patentanwälte

(56) Entgegenhaltungen:
- EP-A- 0 255 675
- EP-A- 0 336 126
- DE-C- 950 173
- US-A- 2 965 263

## Beschreibung

Die Erfindung betrifft eine Vorrichtung zum lagerichtigen Zuführen von Teststreifen zu einer Analyseeinrichtung. Die Teststreifen haben eine Basisschicht, welche üblicherweise aus einer steifen Kunststoffolie besteht und mindestens ein auf einer Seite der Basisschicht befestigtes, gegenüber der Oberfläche der Basisschicht erhabenes Testfeld. Das Testfeld besteht üblicherweise aus einer mit Reagenzien imprägnierten Trägermatrix (meist Papier, Gewebe oder ein poröses Kunststoffmaterial).

Zur Durchführung einer Analyse muß die Probenflüssigkeit (Urin, Blut, Blutserum oder eine andere Körperflüssigkeit) auf das Testfeld oder - im Falle eines Mehrfachteststreifens - auf mehrere Testfelder aufgegeben, danach eine bestimmte Reaktionszeit abgewartet und schließlich an dem Testfeld in einer Auswertestation eine für die Analyse spezifische physikalisch nachweisbare Veränderung ausgewertet werden. Die physikalisch nachweisbare Veränderung ist meist ein Farbumschlag, der photometrisch vermessen wird. Es sind jedoch auch andere Analyseprinzipien bekannt, insbesondere elektrochemische Tests, bei denen das physikalisch nachweisbare Signal ein elektrischer Strom oder eine elektrische Spannung ist.

Unabhängig von Einzelheiten des analytischen Prinzips ist es erforderlich, daß die Teststreifen der Analyseeinrichtung lagerichtig zugeführt werden, d.h. die Testfelder müssen sich zumindest in der Auswertestation zur Auswertung der physikalisch nachweisbaren Veränderung, im Regelfall aber auch in einer Probenzugabestation, in der die Probe (vorzugsweise vollautomatisch) aufgegeben wird, in einer bestimmten Position befinden.

Um dies zu gewährleisten, werden Teststreifen vielfach in Magazinen verpackt (beispielsweise EP-A-0 180 792, Fig. 15) in denen sie sich in geordneter Form in einer für alle Teststreifen gleichen Lage befinden. Dies erfordert jedoch einen erheblichen Aufwand bei der Verpackung der Teststreifen. Die automatische Entnahme aus Magazinen im Gerät wirft besondere Probleme auf und die Lagerhaltung beim Hersteller wird kompliziert, weil zusätzlich zu den Magazinpackungen konventionelle Röhrenpackungen für die manuelle oder halbautomatische Teststreifenanalyse vorrätig gehalten werden müssen.

Die Erfindung richtet sich deswegen speziell auf Fälle, bei denen die üblichen röhrenförmigen Teststreifenpackungen verwendet werden können, in denen die Teststreifen zwar in einer Richtung ausgerichtet sind (d.h. das vordere bzw. hintere Ende der Streifen befindet sich bei allen Streifen am gleichen Ende der Röhre), bei denen die Oberflächen der Testfelder jedoch nicht parallel sondern in unterschiedlichen Raumrichtungen verlaufen, d.h. die Teststreifen sind hinsichtlich ihrer Längsachsen-Rotationsposition ungeordnet. Bei solchen Geräten ist ein Vorratsbehälter vorgesehen, in den die Teststreifen unmittelbar aus den röhrenförmigen Verpackungen geschüttet werden, so daß sie (mindestens) hinsichtlich ihrer Längsachsen-Rotationsposition ungeordnet vorliegen.

Um daraus die Teststreifen einzeln und lagerichtig der Analyseeinrichtung zuzuführen ist es erforderlich, sie zu vereinzeln und danach in die korrekte Längsachsen-Rotationsposition (meist so, daß die Testfelder nach oben gerichtet sind) zu bringen. Teststreifenanalysegeräte weisen zu diesem Zweck Vereinzelungs- und Lagekorrekturvorrichtungen auf, die auch als "Sorter" bezeichnet werden.

Bei der Entwicklung von Sortern für Teststreifen ergeben sich besondere Probleme aus den Eigenschaften der Teststreifen. Sie sind sehr leicht, meist nicht völlig gerade und insgesamt leicht biegsam. Die erhabenen Strukturen der Testfelder, die hierfür verwendeten Materialien und die scharfen Kanten der Basisschicht führen dazu, daß sich Teststreifen leicht ineinander verhaken. Außerdem sind die Testfelder sehr empfindlich gegen mechanische Berührung.

In der EP-A-0 180 792, EP-A-0 255 077 und DE-A-38 07 565 sind Sorter beschrieben, bei denen jeweils die Teststreifen nach der Vereinzelung durch einen schmalen Schacht geführt werden, indem sie nur eine von zwei möglichen Längsachsen-Rotationspositionen (z.B. "Testfeld oben" oder "Testfeld unten") einnehmen können. Welche dieser beiden Positionen der jeweilige Teststreifen hat, wird optoelektronisch detektiert. Am weiteren Transportweg der Teststreifen befindet sich eine Wendeeinrichtung, die den Teststreifen erforderlichenfalls um 180° um seine Längsachse dreht. Die Wendeeinrichtung wird aktiviert, wenn die optoelektronische Detektion eine "falsche" Lage anzeigt. Ist die Lage des Teststreifens dagegen richtig, wird die Wendeeinrichtung nicht aktiviert. Hinter der Wendeeinrichtung befinden sich die Teststreifen alle in der gleichen Rotationsposition bezüglich ihrer Längsachse ("Testfeld oben"). Von dort werden sie mit unterschiedlichen Mitteln zu der Probenaufgabestation und zu der Auswertestation des jeweiligen Analysegerätes transportiert.

Dieses vorbekannte Prinzip erfordert eine Zuführung zu dem engen Schacht, einen optoelektronischen Detektor und eine schnell und zuverlässig funktionierende Wendemechanik. Es ist daher konstruktiv aufwendig. Dennoch wird nicht in allen Fällen die erforderliche Zuverlässigkeit erreicht.

Der Erfindung liegt daher die Aufgabe zugrunde, eine Vorrichtung zum lagerichtigen Zuführen von Teststreifen zu schaffen, die konstruktiv einfach, kostengünstig und zuverlässig in der Funktion ist.

Diese Aufgabe wird bei einer Vorrichtung der einleitend erläuterten Art dadurch gelöst, daß die Vereinzelungs- und Lagekorrekturvorrichtung eine Lagekorrekturstufe einschließt, welche zwei Walzen aufweist, die so dimensioniert und positioniert sind, daß zwischen Ihnen ein enger Spalt vorhanden ist, die Walzen sich gleichsinnig mit einer solchen Drehrichtung drehen, daß sich die Mantelfläche der ersten Walze im Bereich des Spaltes von oben nach unten bewegt, während sich die Mantelfläche der zweiten Walze von unten nach oben bewegt, die erste Walze auf der Mantelfläche umlaufende erhabene Stege aufweist, die so angeordnet sind, daß sie mit testfeldfreien Bereichen der Teststreifen fluchten, die zweite Walze längs der Mantelfläche verlaufende Mitnehmer aufweist und die Breite des Spaltes im Bereich der erhabenen Stege kleiner als die Dicke des Teststreifens einschließlich Testfeld ist.

Die Teststreifen müssen der Lagekorrekturvorrichtung nicht mit hoher Präzision zugeführt werden. Es genügt, wenn sie näherungsweise parallel zu dem Spalt in den trichterförmigen Zwischenraum zwischen den Walzen fallen. Wenn die Teststreifen hinsichtlich ihrer Längsachsenrotationsposition so gedreht sind, daß die erhabenen Stege der ersten Walze in die Zwischenräume zwischen zwei Testfeldern eingreifen, fällt ein "richtig" liegender Teststreifen zwischen den Walzen hindurch. Ein in der "falschen" Längsachsen-Rotationsposition ankommender Teststreifen kann nicht durch den Spalt zwischen den Walzen gelangen. Er wird durch die Mitnehmer der zweiten Walze an seiner Längskante erfaßt und herumgedreht, so daß er in die richtige Position gelangt und durch den Spalt zwischen den Walzen weitertransportiert werden kann.

Erfindungsgemäß erfolgt die Drehung oder Nichtdrehung der Teststreifen also ausschließlich mittels einfachster mechanischer Mittel. Es ist weder eine präzise Zuführung der Teststreifen zu einem engen Transportkanal noch eine elektronische Detektionseinrichtung erforderlich. Die Wendeeinrichtung ist nicht nur konstruktiv einfach aufgebaut, sondern läßt sich auch einfach und mit hoher Zuverlässigkeit betreiben, weil lediglich zwei Walzen mit vorzugsweise gleicher Geschwindigkeit in die gleiche Richtung gedreht werden müssen.

Die Erfindung wird im folgenden anhand eines in den Figuren schematisch dargestellten Ausführungsbeispiels näher erläutert; es zeigen:
- Fig. 1: eine Vereinzelungs- und Lagekorrekturvorrichtung in einer stark schematisierten Seitenansicht;
- Fig. 2: eine Aufsicht auf eine Lagekorrekturstufe von Fig. 1;
- Fig. 3: eine Schnittansicht entlang der Linie III-III der in Fig. 2 dargestellten Lagekorrekturstufe;
- Fig. 4 und Fig. 5: zwei Darstellungen der Lagekorrekturstufe von Fig. 1 zur Erläuterung von deren Funktion.

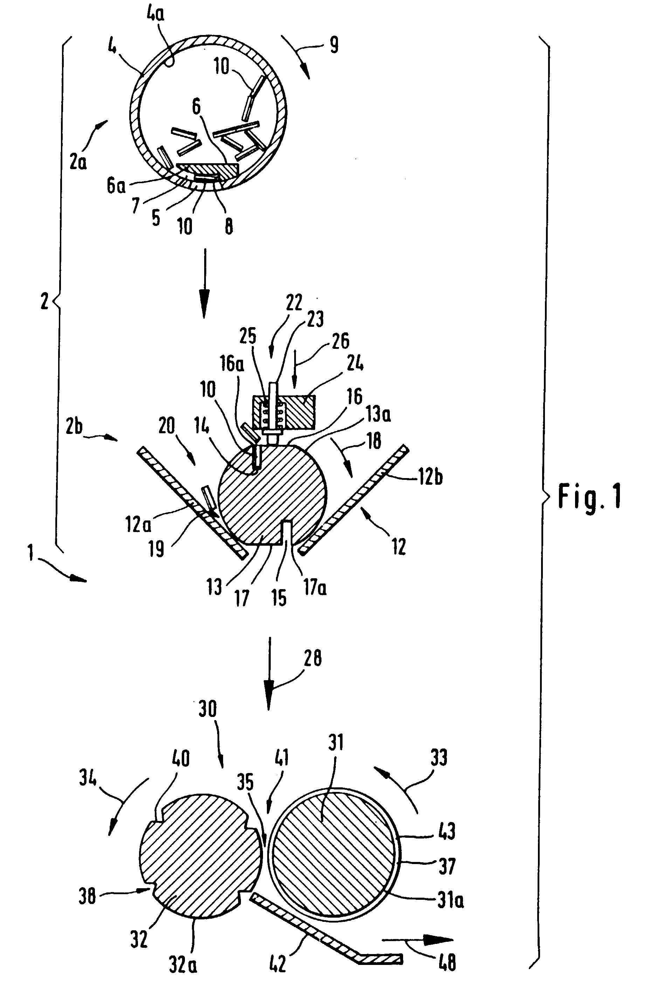

In Figur 1 ist eine Vereinzelungs- und Lagekorrekturvorrichtung 1 für Teststreifen dargestellt, die aus einer Vereinzelungsstufe 2 und einer Lagekorrekturstufe 30 besteht. Die Vereinzelungsstufe 2 setzt sich aus zwei Teilstufen 2a und 2b zusammen.

Die erste Teilstufe 2a weist eine sich drehende Trommel 4 auf, deren Wand in axialer Richtung mit einem Schlitz 5 versehen ist, dessen Breite etwas größer als die Breite eines Teststreifens 10 ist. Für das Füllen der Trommel mit Teststreifen ist eine nicht dargestellte verschließbare Öffnung an der Stirnseite der Trommel 4 vorhanden. Im Innern der Trommel 4 ist ein Mitnehmernocken 6 befestigt, der mit einem zur Innenwand 4a der Trommel 4 parallel verlaufenden Schenkel 6a den Schlitz 5 überspannt. Dadurch wird ein in Drehrichtung nach vorne offener Zwischenraum 7 gebildet. Der Schenkel 6a des Mitnehmernockens 6 erstreckt sich in Drehrichtung über den Schlitz 5 hinaus, wobei die Höhe des Zwischenraumes 7 in etwa der Dicke eines Teststreifens entspricht. Die in Drehrichtung hintere Begrenzung des Zwischenraumes 7 wird von einer Anschlagfläche 8 gebildet, welche mit der in Drehrichtung gesehen hintere Kante des Schlitzes 5 fluchtet.

Die Trommel 4 wird mit Teststreifen gefüllt, die bis auf ihre Längsachsen-Rotationsposition die gleiche räumliche Ausrichtung einnehmen. Wenn sich die Trommel 4 in der durch den Pfeil 9 angegebenen Drehrichtung dreht, bewirkt die Drehung, daß jeweils ein Teststreifen 10 in den Zwischenraum 7 eingeführt wird. Die Relativbewegung des Teststreifens 10 gegenüber der Trommel 4 wird durch die Anschlagfläche 8 des Mitnehmernockens 6 gestoppt. Aufgrund der Schwerkraft fällt der Teststreifen 10 durch den Schlitz 5 nach unten aus der Trommel heraus. Dadurch, daß die Höhe des Zwischenraumes 7 in etwa der Dicke und die Breite des Schlitzes 5 in etwa der Breite des Teststreifens 10 entspricht, kann jeweils nur ein Teststreifen 10 durch den Schlitz 5 gelangen.

Um auch in Fällen, bei denen die Teststreifen 10 aufgrund ihrer besonderen Eigenschaften besonders leicht ineinander verhaken, eine sichere Vereinzelung zu gewährleisten, ist im Anschluß an die erste Teilstufe 2a der Vereinzelungsstufe 2 eine zweite Teilstufe 2b vorgesehen.

Die zweite Teilstufe 2b weist eine trichterförmige Anordnung 12 auf, die aus zwei schräg geneigten Flächen 12a und 12b besteht. Eine Walze 13 ist in der trichterförmigen Anordnung 12 mittig angeordnet, wobei jede der schrägen Flächen 12a, 12b tangential zu der Walze 13 verläuft. Die Walze 13 ist mit zwei Aufnahmen 14,15 in Form von Nuten mit rechteckigem Querschnittsprofil versehen. In jede Aufnahme paßt jeweils hochkant nur ein Teststreifen 10, wobei seine Längsachse parallel zur Achse der Walze 13 ausgerichtet ist. Die Tiefe der Aufnahmen 14,15 entspricht der Breite der Teststreifen 10. Im Bereich der Aufnahmen 14,15 ist die Walze 13 mit jeweils einer zu ihrer Längsachse parallelen Abflachung 16,17 versehen, wobei sich die Aufnahmen 14,15 jeweils in Drehrichtung der Walze 13 (Pfeil 18) in der Nähe der sich durch die Abflachungen 16,17 ergebenden hinteren Kanten 16a,17a befinden. Die links von der Achse der Walze 13 verlaufende schräge Fläche 12a verläuft mit einem engen Spalt 19 an der Walze 13 vorbei, wobei die Breite des Spaltes kleiner als die Dicke eines Teststreifens 10 (einschließlich Testfeld) ist, so daß kein Teststreifen 10 zwischen der Walze 13 und der schrägen Fläche 12a hindurchrutschen kann.

Die aus der ersten Teilstufe 2a herausfallenden Teststreifen 10 gelangen in einen zwischen der Fläche 12a und der Walze 13 gebildeten Auffangtrichter 20, wobei wesentlich ist, daß sich der Auffangtrichter 20 auf derjenigen Seite der Walze 13 befindet, in der ihre Mantelfläche 13a sich von unten nach oben bewegt. Die Fallbewegung eines Teststreifens 10 wird durch den Auffangtrichter 20 gestoppt. Kommt eine der Abflachungen 16 oder 17 der Walze 13 in den Bereich des Spaltes 19, so vergrößert sich dieser, der Teststreifen 10 rutscht weiter nach unten und wird durch eine der Nuten 14,15 aufgenommen.

Oberhalb der Walze 13 ist eine Abstreifeinrichtung 22 angeordnet. Ein Abstreifelement 23, welches als runder Stift oder auch als sich über die gesamte Länge der Walze erstreckendes Lineal ausgebildet sein kann, ist in einer Vertikalführung 24 derartig gelagert, daß es radial zur Achse der Walze 13 beweglich ist. Es steht mittels einer Feder 25 unter Vorspannung, so daß es in Richtung des Pfeiles 26 gegen die Walze 13 gedrückt wird und auf der Mantelfläche 13a der Walze 13 schleift. Wenn eine der Nuten 14,15 sich unter dem Abstreifelement 23 hindurchbewegt, wie in der Zeichnung dargestellt, wird ein eventuell an dem in der Aufnahme 14 befindlichen Teststreifen 10 hängender weiterer Teststreifen abgestreift und fällt in den Auffangtrichter 20 zurück.

Die rechte (d.h. auf derjenigen Seite, auf der sich die Mantelfläche 13a der Walze 13 von oben nach unten bewegt angeordnete) schräge Fläche 12b dient dazu, ein vorzeitiges Herausfallen der Teststreifen aus den Aufnahmen 14, 15 zu verhindern. Erst wenn die jeweils untere Aufnahme 15 etwa die in der Figur dargestellte vertikale Position erreicht hat, fällt jeweils ein einzelner Teststreifen nach unten aus der zweiten Teilstufe 2b heraus und gelangt in der durch den Pfeil 28 angedeuteten Art und Weise in die Lagekorrekturstufe 30.

Die Lagekorrekturstufe 30 bildet die zweite Stufe der Vereinzelungs- und Lagekorrekturvorrichtung 1. Sie weist zwei zylinderförmige Walzen 31,32 auf, die sich in der gleichen Richtung (33,34) drehen. Die Achsen der Walzen 31,32 verlaufen parallel zueinander. Ihr Abstand und der Durchmesser der Walzen 31,32 sind so aufeinander abgestimmt, daß zwischen den Walzen 31,32 ein enger Spalt 35 vorhanden ist.

Die erste Walze 31 weist umlaufende Stege 37 auf. Die zweite Walze 32 ist mit achsparallel verlaufenden Mitnehmern 38 versehen, die als Nuten 40 mit dreieckigem Querschnitt ausgebildet sind. Die Teststreifen 10 gelangen zunächst in den zwischen ihnen vorhandenen trichterförmigen Zwischenraum 41, der an seinem unteren Ende in den Spalt 35 übergeht. Unterhalb der Walzen 31,32 ist eine schräge Rampe 42 angeordnet, auf der Teststreifen 10, welche die Lagekorrekturvorrichtung 30 passiert haben, herabgleiten, um einer nicht dargestellten Analysevorrichtung zugeführt zu werden (Pfeil 48).

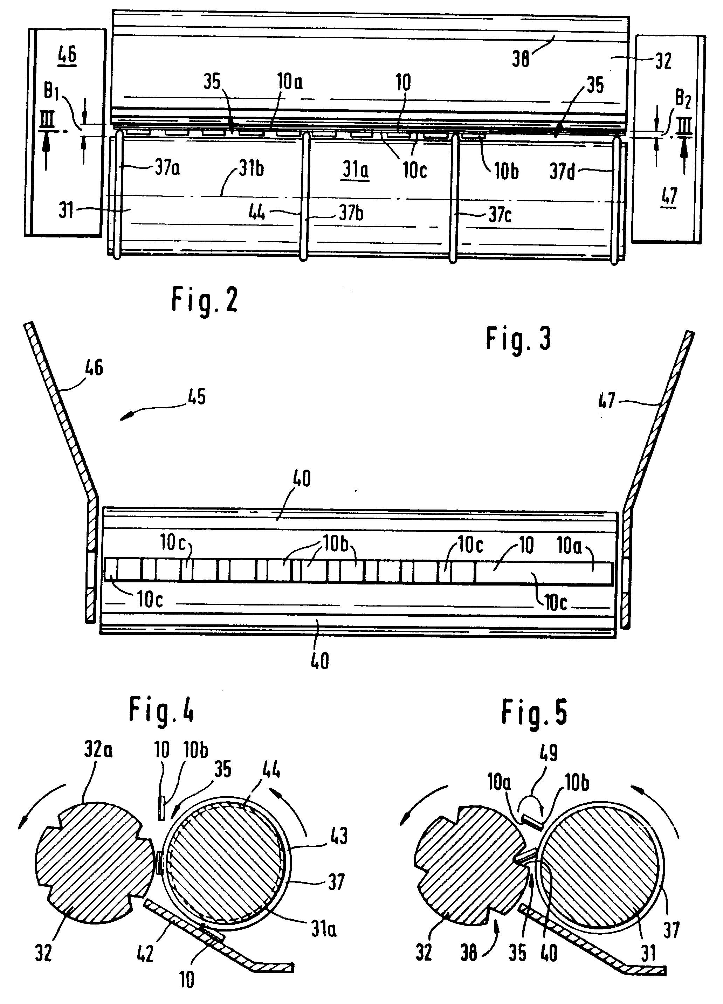

Einzelheiten der Lagekorrekturstufe 30 sind in den Figuren 2 bis 5 dargestellt.

Die Stege 37 laufen auf der Mantelfläche 31a der ersten Walze 31 derartig um, daß ihre Position, bezogen auf die Längsrichtung des Teststreifens 10 in dem Spalt 35, konstant bleibt. Mit anderen Worten liegen die Stege 37 jeweils in einer senkrecht zu der Achse 31b der Walze 31 verlaufenden Ebene. Diese Bedingung ist auch dann einzuhalten, wenn statt der dargestellten zylinderförmigen Walzen kegelförmige Walzen verwendet werden, was grundsätzlich möglich, jedoch weniger bevorzugt ist.

Eine besonders einfach zu montierende und zu fertigende Anordnung erhält man, wenn zur Bildung der Stege Profilringe 43 aus einem gummielastischen Material, beispielsweise O-Ringe, verwendet werden, die in einer entsprechenden, auf der Mantelfläche 31a umlaufenden Nut 44 sitzen.

In axialer Richtung sind die Stege 37 auf der Walze 31 so angebracht, daß sie mit jeweils einem der testfeldfreien Bereichen 10c der Teststreifen 10 fluchten. Im dargestellten bevorzugten Fall ist der Teststreifen 10 ein Mehrfachteststreifen mit mehreren auf einer Basisschicht 10a hintereinander befestigten Testfeldern 10b. In diesem Fall sollte die Walze mindestens drei Stege aufweisen, von denen mindestens einer zwischen zwei benachbarten Testfeldern verläuft, wie dies in Figur 2 für die Stege 37b und 37c dargestellt ist.

Selbstverständlich ist es erforderlich, daß die Teststreifen 10 hinsichtlich ihrer Längsposition derartig zugeführt werden, daß ihre testfeldfreien Bereiche mit den Stegen 37a bis 37d fluchten. Dies kann grundsätzlich manuell oder mit Hilfe einer Handhabungsmechanik (Robotermechanik) geschehen. Wenn gemäß der in Figur 1 dargestellten Ausführungsform der Lagekorrekturstufe 30 eine Vereinzelungsstufe 2 vorausgeht, aus der die Teststreifen 10 frei in den trichterförmigen Zwischenraum 41 fallen, ist zweckmäßigerweise eine Längspositionsführung 45 vorgesehen, die im dargestellten Fall ähnlich einem Trichter aufgebaut, wobei zwei schräge Führungsflächen 46, 47 an den Stirnseiten der Walzen 31,32 derartig angeordnet sind, daß ein Teststreifen 10 in die korrekte Position hinsichtlich seiner Längsachse geführt wird.

Für die Funktion der Lagekorrekturstufe ist die Dimensionierung des Spaltes 35, der Stege 37 und der Mitnehmer 38 wichtig. Sie läßt sich auf Basis der nachfolgenden Erläuterungen empirisch festlegen.

Die Breite B₁ des Spaltes 35 muß im Bereich der Testfelder 10b selbstverständlich größer als die Dicke des Teststreifens 10 einschließlich Testfeld sein, damit ein Teststreifen 10, welcher in der in Figur 2 dargestellten "richtigen" Längsachsen-Rotationsposition in den Spalt 35 eindringt, quer zu seiner Längsachse durch den Spalt 35 transportiert werden kann. In jedem Fall muß jedoch im Bereich der Stege 37 die Breite B₂ des Spaltes 35 kleiner als die Dicke des Teststreifens 10 einschließlich Testfeld sein. Wenn - wie bei der dargestellten bevorzugten Ausführungsform - die Walze 31 abgesehen von den Stegen 37 eine glatte, zylindrische Mantelfläche 31a hat, ergibt sich daraus, daß die Höhe, um die die Stege 37 aus der Mantelfläche 31a hervorragen, zweckmäßigerweise geringfügig größer als die Dicke der Testfelder 10b (bzw. bei unterschiedlichen Testfelddicken als das dickste Testfeld) ist.

Die Walzen 31, 32 drehen sich wie erwähnt gleichsinnig, wobei die mit den Stegen 37 versehene Walze 31 sich so dreht, daß sich ihre Mantelfläche 31a im Bereich des Spaltes 35 von oben nach unten bewegt, während sich die Mantelfläche 32a der Walze 32 im Bereich des Spaltes 35 von unten nach oben bewegt. Diese Drehung der Walzen und die oben erläuterte Dimensionierung führen dazu, daß ein Teststreifen 10, der hinsichtlich seiner Längsachsen-Rotationsposition so zugeführt wird, daß seine Basisschicht zu der ersten Walze 31 orientiert ist und seine Testfelder 10b zu der zweiten Walze 32 orientiert sind ("falsche" Längsachsen-Rotationsposition) nicht durch den Spalt 35 hindurchtransportiert wird. Wie Figur 5 zeigt, führt einer der Mitnehmer 38 der zweiten Walze 32 einen solchen Teststreifen 10 wieder aus dem Spalt 35 heraus. Die Mitnehmer 38 sind dabei so gestaltet, daß der Teststreifen 10 gleichzeitig einen Impuls in Richtung einer Rotation um seine Längsachse bekommt. Dadurch wird der Teststreifen 10 in der durch den Pfeil 49 angedeuteten Weise gedreht und in die "richtige" Position gebracht, bei der die Testfelder 10b der Walze 31 zugewandt sind und die Basisschicht 10a der Walze 32 zugewandt ist.

Zur Unterstützung dieser Längsachsen-Rotation von der falschen in die richtige Position ist es bevorzugt, wenn der Teststreifen in dem Moment, in dem er in eine der Nuten 40 eingedrungen ist, zugleich an den Stegen 37 der Walze 31 anliegt. Dabei ist es vorteilhaft, wenn die Nuten 40 einen näherungsweise dreieckigen Querschnitt haben. Der Öffnungswinkel sollte relativ stumpfwinklig sein (d.h. mindestens etwa 70° betragen). Die gegenläufige Bewegung der beiden Walzen 31,32 unterstützt dabei die Rotation um die Längsachse. Die Tiefe der Nuten 40 sollte daher etwa so bemessen sein, daß der Abstand zwischen der tiefsten Stelle der Nut 40 und den Stegen 37 (in der Position der größten Annäherung der Nut 40 an die Walze 31) etwas (ca. 10 bis 50%) kleiner als die Breite der Teststreifen 10 ist. Dabei ist es besonders vorteilhaft, wenn die Stege 37, wie oben erläutert, aus einem gummielastischen Material bestehen.

Sobald sich ein Teststreifen 10 in der richtigen Position befindet, wird er durch den Spalt 35 hindurchtransportiert und wird über die Rampe 42 für die Zuführung zu dem Analysegerät bereitgestellt. Wenn ein Teststreifen 10, wie in Fig. 4 dargestellt, in der richtigen Position zugeführt wird, wird er ohne Drehung durch den Spalt 35 hindurchtransportiert.

## Patentansprüche

1. Vorrichtung zum lagerichtigen Zuführen von Teststreifen (10) zu einer Analyseeinrichtung, wobei
die Teststreifen (10) eine Basisschicht (10a) und mindestens ein auf einer Seite der Basisschicht (10a) befestigtes gegenüber der Oberfläche der Basisschicht (10a) erhabenes Testfeld aufweisen,
die Teststreifen (10) in einem Vorratsbehälter hinsichtlich ihrer Längsachsen-Rotationsposition ungeordnet sind und
eine Vereinzelungs- und Lagekorrekturvorrichtung (1) vorgesehen ist, um die Teststreifen einzeln nacheinander in einer hinsichtlich der Längsachsen-Rotationsposition definierten Lage der Analyseeinrichtung zuzuführen,
**dadurch gekennzeichnet**, daß
die Vereinzelungs- und Lagekorrekturvorrichtung (1) eine Lagekorrekturstufe (30) einschließt, welche zwei Walzen (31,32) aufweist, die so dimensioniert und positioniert sind, daß zwischen ihnen ein enger Spalt (35) vorhanden ist,
die Walzen (31,32) sich gleichsinnig so drehen, daß sich die Mantelfläche (31a) der ersten Walze im Bereich des Spaltes (35) von oben nach unten bewegt, während sich die Mantelfläche (32a) der zweiten Walze (32) von unten nach oben bewegt,
die erste Walze (31) auf der Mantelfläche (31a) umlaufende erhabene Stege (37) aufweist, die so angeordnet sind, daß sie mit testfeldfreien Bereichen (10c) der Teststreifen (10) fluchten,
die zweite Walze (32) längs ihrer Mantelfläche verlaufende Mitnehmer (38) aufweist, und
die Breite (B₂) des Spaltes (35) im Bereich der erhabenen Stege (37) kleiner als die Dicke der Teststreifen (10) einschließlich Testfeld ist.

2. Vorrichtung nach Anspruch 1, **dadurch gekennzeichnet**, daß die Teststreifen (10) Mehrfachteststreifen mit mehreren auf der Basisschicht (10a) hintereinander befestigten Testfelder (10b) sind und die erste Walze (31) mindestens drei Stege (37) aufweist, von denen mindestens einer (37b,37c) zwischen zwei benachbarten Testfeldern (10b) verläuft.

3. Vorrichtung nach Anspruch 1 oder 2, **dadurch gekennzeichnet**, daß die Stege (37) von Profilringen (43) aus einem gummielastischen Material gebildet sind, die in entsprechenden Nuten (44) der ersten Walze (31) positioniert sind.

4. Vorrichtung nach einem der vorhergehenden Ansprüche, **dadurch gekennzeichnet**, daß die längs der Mantelfläche verlaufenden Mitnehmer (38) der zweiten Walze (32) als Nuten (40) in einer im übrigen glatten Mantelfläche (32a) ausgebildet sind.

5. Vorrichtung nach einem der vorhergehenden Ansprüche, **dadurch gekennzeichnet,** daß die Lagekorrekturstufe (30) eine Längspositionsführung (45) aufweist, durch die die Teststreifen (10) in ihrer Längsrichtung so geführt werden, daß ihre testfeldfreien Bereiche (10c) mit den Stegen 37 der ersten Walze (31) fluchten.

6. Vorrichtung nach einem der vorhergehenden Ansprüche, **dadurch gekennzeichnet**, daß die Vereinzelungs- und Lagekorrekturvorrichtung (1) eine Vereinzelungsstufe (2) einschließt, welche eine sich drehende Trommel (4) aufweist, deren Wand mit einem zur Achse der Trommel (4) parallelen Schlitz (5) versehen ist und ein Mitnehmernocken (6) in der Trommel (4) über dem Schlitz (5) derartig angeordnet ist, daß die Teststreifen (10) zu dem Schlitz (5) geführt werden und einzeln aus der Trommel (4) austreten.

7. Vorrichtung nach einem der Ansprüche 1 bis 5, **dadurch gekennzeichnet**, daß die Vereinzelungs- und Lagekorrekturvorrichtung 1 eine Vereinzelungsstufe 2 einschließt, die eine sich drehende Walze 13 mit achsparallelen Aufnahmen (14,15) für jeweils einen Teststreifen (10) und eine Abstreifeinrichtung (22) für ineinander verhakte Teststreifen (10) aufweist.

8. Vorrichtung nach Anspruch 7, **dadurch gekennzeichnet**, daß die Walze (13) im Bereich der Aufnahmen (14,15) jeweils eine Abflachung (16,17) aufweist und die Teststreifen (10) zu der Walze (13) mittels einer schräg geneigten, zur Walze etwa tangential verlaufenden Fläche (12a) zugeführt werden, wobei der geringste Abstand zwischen der Fläche (12a) und der Walze (13) kleiner als die Dicke des Teststreifens (10) einschließlich Testfeld (10b) ist.

9. Vorrichtung nach einem der Ansprüche 7 oder 8, **dadurch gekennzeichnet**, daß die Abstreifeinrichtung (22) ein bezogen auf die Achse der Walze (13) radial geführtes Abstreifelement (23) aufweist, das auf der Mantelfläche (13a) der Walze (13) derartig schleift, daß es einen Teststreifen, der sich mit einem in der Aufnahme befindlichen Teststreifen (10) verhakt hat, ablöst.

10. Vorrichtung nach den Ansprüchen 6 und 7, **dadurch gekennzeichnet**, daß die Vereinzelungsstufe (2) zwei Teilstufen (2a, 2b) aufweist, von denen eine Teilstufe gemäß Anspruch 6 und die andere Teilstufe gemäß Anspruch 7 ausgebildet ist.

## Claims

1. Device for the positionally correct feeding of test strips (10) to an analysis unit, in which
the test strips (10) comprise a base layer (10a) and at least one test field fixed to one side of the base layer (10a) and raised with respect to the surface of the base layer (10a),
the test strips (10) are disordered with respect to their longitudinal axis rotation position in a storage container and
a separation and position correcting device (1) is provided in order to feed the test strips individually one after the other in a defined position with respect to the longitudinal axis rotation position to the analysis unit,
**characterised in that**
the separation and position correcting device (1) includes a position correcting stage (30), which comprises two rolls (31, 32) which are so dimensioned and positioned that a narrow gap (35) exists between them,
the rolls (31, 32) rotate in the same direction so that the surface (31a) of the first roll moves in the region of the gap (35) from top to bottom, while the surface (32a) of the second roll (32) moves from bottom to top,
the first roll (31) comprises on the surface (31a) peripheral raised webs (37) which are so arranged that they are in alignment with test field-free regions (10c) of the test strips (10),
the second roll (32) comprises drivers (38) running alongside of its surface, and
the width (B₂) of the gap (35) is smaller in the region of the raised webs (37) than the thickness of the test strips (10) including the test field.

2. Device according to claim 1, **characterised in that** the test strips (10) are multiple test strips with a plurality of test fields (10b) fixed one behind the other to the base layer (10a) and the first roll (31) comprises at least three webs (37), at least one (37b, 37c) of which runs between two adjacent test fields (10b).

3. Device according to claim 1 or 2, **characterised in that** the webs (37) are formed from shaped rings (43) of an elastic rubber material, which are positioned in corresponding grooves (44) in the first roll (31).

4. Device according to any one of the preceding claims, **characterised in that** the drivers (38) of the second roll (32) running alongside of the surface are formed as grooves (40) in an otherwise smooth surface (32a).

5. Device according to any one of the preceding claims, **characterised in that** the position correcting stage (30) comprises a longitudinal position guide (45) through which the test strips (10) are guided in their longitudinal direction so that their test-field free regions (10c) are in alignment with the webs (37) of the first roll (31).

6. Device according to any one of the preceding claims, **characterised in that** the separation and position correcting device (1) includes a separation stage (2), which comprises a rotating drum (4) whose wall is provided with a slot (5) parallel to the axis of the drum (4), and a cam catch (6) is arranged in the drum (4) above the slot (5) in such a way that the test strips (10) are guided to the slot (5) and leave the drum (4) individually.

7. Device according to any one of claims 1 to 5, **characterised in that** the separation and position correcting device (1) includes a separation stage (2) which comprises a rotating roll (13) with axially parallel receivers (14, 15) for respectively one test strip (10)and a stripping device (22) for test strips (10) entangled with one another.

8. Device according to claim 7 , **characterised in that** the roll (13) comprises in the region of the receivers (14, 15) in each case a flattening (16, 17) and the test strips (10) are fed to the roll (13) by means of an obliquely inclined surface (12a) roughly tangential to the roll, the smallest distance between the surface (12a) and the roll (13) being smaller than the thickness of the test strip (10) including the test field (10b).

9. Device according to any one of claims 7 or 8, **characterised in that** the stripping device (22) comprises a stripping element (23) guided radially relative to the axis of the roll (13), which trails on the surface (13a) of the roll (13) in such a way that it releases a test strip which has become entangled with a test strip (10) located in the receiver.

10. Device according to claims 6 and 7, **characterised in that** the separation stage (2) comprises two sub-stages (2a, 2b), one sub-stage of which is constructed according to claim 6 and the other sub-stage according to claim 7.

## Revendications

1. Appareil pour amener vers un dispositif d'analyse des bandes de test (10) dans une position correcte,
les bandes de test (10) possédant une couche de base (10a) et au moins une zone de test fixée sur une face de la couche de base (10a), la zone de test étant surélevée par rapport à la surface de la couche de base (10a),
les bandes de test (10) se trouvant disposées dans un réservoir de manière désordonnée en ce qui concerne leur position de rotation autour de l'axe longitudinal, et
un dispositif (1) de séparation et de correction de position étant prévu de façon à amener séparément les unes après les autres vers le dispositif d'analyse les bandes de test dans une position qui est définie en ce qui concerne leur position de rotation autour de l'axe longitudinal,
caractérisé en ce que,
le dispositif (1) de séparation et de correction de position contient une unité de correction de position (30) qui comprend deux cylindres (31, 32) dimensionnés et disposés de façon à ce qu'il y ait une fente étroite (35) entre eux,
les cylindres (31, 32) tournent dans le même sens de façon à ce que la surface latérale (31a) du premier cylindre se déplace du haut vers le bas dans la région de la fente (35) tandis que la surface latérale (32a) du deuxième cylindre (32) se déplace du bas vers le haut,
le premier cylindre (31) possède des garnitures (37) surélevées entourant sa surface latérale (31a), qui sont disposées de façon à ce qu'elles soient au niveau des régions ne comportant pas de zone de test (10c) des bandes de test (10),
le deuxième cylindre (32) comporte des encoches d'entraînement (38) s'étendant le long de sa surface latérale et
la largeur (B₂) de la fente (35) au niveau des garnitures surélevées (37) est plus petite que l'épaisseur des bandes de test (10), zones de test comprises.

2. Appareil selon la revendication 1, caractérisé en ce que les bandes de test (10) sont des bandes de tests multiples comportant plusieurs zones de test (10b) fixées les unes derrière les autres sur la couche de base (10a) et en ce que le premier cylindre (31) comporte au moins trois garnitures (37) dont au moins une (37b, 37c) s'étend entre deux zones de test (10b) voisines.

3. Appareil selon la revendication 1 ou 2, caractérisé en ce que les garnitures (37) des anneaux (43) sont constituées par un matériau élastique et sont positionnées dans les rainures (44) correspondantes du premier cylindre (31).

4. Appareil selon l'une quelconque des revendications précédentes, caractérisé en ce que les encoches d'entraînement (38) du deuxième cylindre (32), s'étendant le long de la surface latérale, se présentent sous la forme de rainures (40) dans une surface latérale (32a) par ailleurs lisse.

5. Appareil selon l'une quelconque des revendications précédentes, caractérisé en ce que l'unité de correction de position (30) comprend un guidage de positionnement en longueur (45), par lequel les bandes de test (10) sont amenées dans le sens de la longueur de façon à ce que leurs régions (10c) ne comportant pas de zone de test soient au niveau des garnitures (37) du premier cylindre (31).

6. Appareil selon l'une quelconque des revendications précédentes, caractérisé en ce que le dispositif (1) de séparation et de correction de position comprend une unité de séparation (2), laquelle comporte un tambour rotatif (4) dont la paroi est munie d'une fente (5) parallèle à l'axe du tambour (4) et en ce qu'un mentonnet d'entraînement (6) est disposé dans le tambour (4) au-dessus de la fente (5) de façon à ce que les bandes de test (10) soient entraînées vers la fente (5) et sortent du tambour (4) une par une.

7. Appareil selon l'une quelconque des revendications 1 à 5, caractérisé en ce que le dispositif (1) de séparation et de correction de position comprend une unité de séparation (2), laquelle comporte un cylindre rotatif (13) muni de deux orifices récepteurs (14, 15), parallèles à l'axe, chacun pouvant recevoir une bande de test (10), et un dispositif de séparation (22) des bandes de test (10) agglutinées.

8. Appareil selon la revendication 7, caractérisé en ce que le cylindre (13) comporte un plat (16, 17) au niveau de chacun des orifices récepteurs (14, 15) et en ce que les bandes de test (10) sont amenées jusqu'au cylindre (13) au moyen d'une surface inclinée (12a), s'étendant à peu près tangentiellement par rapport au cylindre, la distance la plus faible entre la surface (12a) et le cylindre (13) étant plus petite que l'épaisseur des bandes de test (10), zones de test (10b) comprises.

9. Appareil selon l'une quelconque des revendications 7 et 8, caractérisé en ce que le dispositif de séparation (22) comporte un élément de séparation (23), guidé en direction radiale par rapport à l'axe du cylindre (13), rasant la surface latérale (13a) du cylindre (13) de façon à détacher toute bande de test adhérant à une bande de test (10) qui se trouve dans l'orifice récepteur.

10. Appareil selon les revendications 6 et 7, caractérisé en ce que l'unité de séparation (2) comporte deux sous-unités (2a, 2b), une des sous-unités étant constituée selon la revendication 6 et l'autre, selon la revendication 7.
